# EUROPEAN PATENT APPLICATION

(11) **EP 4 597 679 A1**
(43) Date of publication of application: **06.08.2025**
(21) Application number: 23871380.4
(22) Date of filing: 12.07.2023
(51) Int. Cl.: H01M 10/0587, H01M 4/134, H01M 4/38, H01M 50/531

(54) **NON-AQUEOUS ELECTROLYTE SECONDARY BATTERY**

(30) Priority: 30.09.2022 JP 2022158383
(71) Applicant: Panasonic Energy Co., Ltd., Osaka 570-8511 (JP)
(72) Inventor: ISHIGURO Tasuku, Kadoma-shi, Osaka 571-0057 (JP); SASA Tatsuro, Kadoma-shi, Osaka 571-0057 (JP); MATSUMOTO Katsumasa, Kadoma-shi, Osaka 571-0057 (JP); ASADA Yuki, Kadoma-shi, Osaka 571-0057 (JP)
(74) Representative: Novagraaf International SA
(86) International application number: PCT/JP2023/025677
(87) International publication number: WO 2024/070136

(57) **Abstract**

A non-aqueous electrolyte secondary battery comprises: an electrode body obtained by winding a negative electrode (12) in which a negative electrode mixture layer (32) is formed on a negative electrode core body (30) and a positive electrode, with a separator therebetween; and a non-aqueous electrolyte. The non-aqueous electrolyte secondary battery is characterized in that: the negative electrode (12) has, at the winding direction inner-end side of the electrode body, a non-facing part (12a) which does not face the positive electrode with the separator therebetween; the non-facing part (12a) has a mixture non-facing part (12c) in which the negative electrode mixture layer (32) is formed on at least one surface of the negative electrode core body (30), from the winding direction outer end of the non-facing part (12a) and toward the winding direction inner side; and the average value of a mixture surface distance which is between the mixture non-facing part (12c) and the negative electrode (12e) positioned one turn outward of the mixture non-facing part (12c) is not less than 90 µm.

## Description

### TECHNICAL FIELD

The present disclosure relates to a non-aqueous electrolyte secondary battery.

### BACKGROUND

In recent years, as a secondary battery having high output and high energy density, a non-aqueous electrolyte secondary battery including an electrode assembly in which a positive electrode and a negative electrode are arranged to face each other with a separator interposed therebetween has been widely used.

For example, Patent Literature 1 discloses a non-aqueous electrolyte secondary battery including a winding electrode assembly in which a positive electrode and a negative electrode are wound with a separator interposed therebetween, in which the negative electrode includes a non-facing portion wound 1.25 turns or more from an inner end in a winding direction of the wound electrode assembly in a state of not facing the positive electrode with the separator interposed therebetween, the non-facing portion includes a negative electrode mixture layer forming portion in which a negative electrode mixture layer is formed continuously from an outer end in the winding direction toward an inner side in the winding direction on at least one surface, and the negative electrode mixture layer forming portion is wound 0.75 turns or more.

As in Patent Literature 1, by providing the negative electrode with the non-facing portion that does not face the positive electrode on the inner end side in the winding direction of the electrode assembly, the circularity of a winding core portion of the electrode assembly can be improved. Thus, for example, the gas release property of the winding core portion can be maintained, so that the safety of the battery is ensured.

### CITATION LIST

### PATENT LITERATURE

Patent Literature 1: WO 2081/116876 A1

### SUMMARY

By the way, in a non-aqueous electrolyte secondary battery including a winding-type electrode assembly, when the electrode assembly expands due to a charge-discharge cycle, stress is locally applied to a central portion of the electrode assembly, an electrode plate at a location where the positive electrode and the negative electrode face each other may be deformed, and variations in the depth of charge may occur in the surface of the electrode plate.

Therefore, an object of the present disclosure is to provide a non-aqueous electrolyte secondary battery capable of suppressing deformation of an electrode plate at a location where a positive electrode and a negative electrode face each other while maintaining circularity of a winding core portion of an electrode assembly.

A non-aqueous electrolyte secondary battery according to the present disclosure includes: an electrode assembly in which a positive electrode and a negative electrode in which a negative electrode mixture layer is formed on a negative electrode core are wound with a separator interposed therebetween; and a non-aqueous electrolyte, in which the negative electrode has a non-facing portion that does not face the positive electrode with the separator interposed therebetween on an inner end side of the electrode assembly in a winding direction of the electrode assembly, the non-facing portion has a mixture non-facing portion in which the negative electrode mixture layer is formed from an outer end of the non-facing portion in a winding direction of the non-facing portion toward an inner side of the non-facing portion in the winding direction on at least one surface of the negative electrode core, and an average value of a mixture surface distance between the mixture non-facing portion and a negative electrode located one turn outward of the mixture non-facing portion is greater than or equal to 90 µm.

According to the present disclosure, it is possible to provide a non-aqueous electrolyte secondary battery capable of suppressing deformation of an electrode plate at a location where a positive electrode and a negative electrode face each other while maintaining circularity of a winding core portion of an electrode assembly.

### BRIEF DESCRIPTION OF DRAWINGS

FIG. 1 is a schematic cross-sectional view of a non-aqueous electrolyte secondary battery as an example of an embodiment.
FIG. 2 is a diagram schematically showing a portion on an inner end side of an electrode assembly in a winding direction of the electrode assembly in an A-A cross section in FIG. 1.
FIG. 3 is a schematic cross-sectional view showing a configuration of a negative electrode on the inner end side in the winding direction of the electrode assembly.
FIG. 4 is a diagram for explaining a method for evaluating deformation of an electrode plate.

### DESCRIPTION OF EMBODIMENTS

Hereinafter, an example of an embodiment of a non-aqueous electrolyte secondary battery according to the present disclosure will be described in detail.

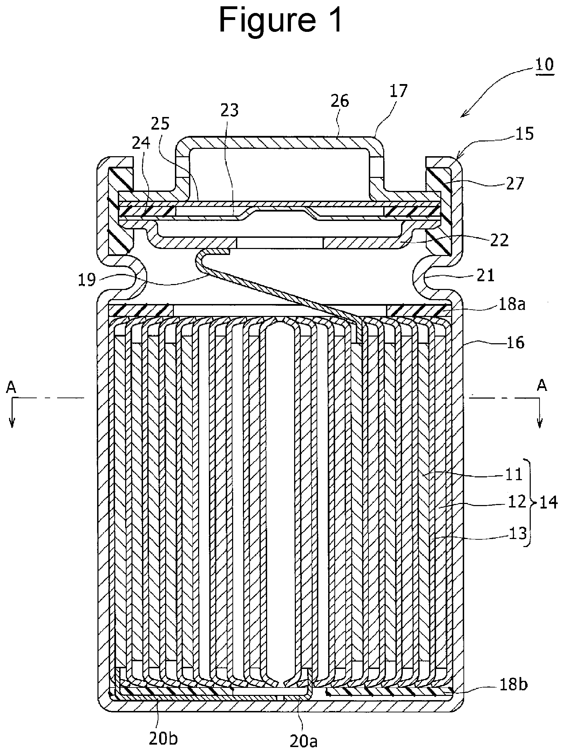

FIG. 1 is a schematic cross-sectional view of a non-aqueous electrolyte secondary battery according to an embodiment. The non-aqueous electrolyte secondary battery 10 shown in FIG. 1 includes a winding-type electrode assembly 14 formed by winding a positive electrode 11 and a negative electrode 12 with a separator 13 interposed therebetween, a non-aqueous electrolyte, insulating plates 18a and 18b disposed on the upper and lower sides of the electrode assembly 14, respectively, and a battery case 15 which is an exterior body. The battery case 15 includes a case body 16 that houses the electrode assembly 14, the non-aqueous electrolyte, and the like, and a sealing assembly 17 that closes an opening of the case body 16. The battery case 15 is not limited to a cylindrical or rectangular metal case, and may be, for example, a resin case (a so-called laminate-type case) formed by laminating a resin sheet.

The non-aqueous electrolyte includes, for example, a non-aqueous solvent and electrolyte salt dissolved in the non-aqueous solvent. Examples of the non-aqueous solvent include esters, ethers, nitriles, amides, and a mixed solvent of two or more types of these. The non-aqueous solvent may contain a halogen-substituted product obtained by substituting at least a hydrogen of these solvents with a halogen atom such as fluorine. As the electrolyte salt, for example, a lithium salt such as LiPF₆ is used.

The case body 16 is, for example, a cylindrical metal container with a bottom. A gasket 27 is provided between the case body 16 and the sealing assembly 17 to ensure airtightness within the battery. The case body 16 has a projecting portion 21 in which, for example, a part of a side surface portion of the case body 16 projects inward to support the sealing assembly 17. The projecting portion 21 is preferably formed in an annular shape in the circumferential direction of the case body 16, and supports the sealing assembly 17 on the upper surface of the projecting portion.

The sealing assembly 17 has a structure in which a filter 22, a lower vent member 23, an insulating member 24, an upper vent member 25, and a cap 26 are sequentially stacked from the electrode assembly 14 side. Each of the members constituting the sealing assembly 17 has, for example, a disk shape or a ring shape, and the members excluding the insulating member 24 are electrically connected to each other. The lower vent member 23 and the upper vent member 25 are connected to each other at their central portions, and the insulating member 24 is interposed between peripheral edges of the lower vent member 23 and the upper vent member 25. When the internal pressure of the non-aqueous electrolyte secondary battery 10 increases due to heat generation caused by an internal short circuit or the like, for example, the lower vent member 23 is deformed to push up the upper vent member 25 toward the cap 26 side and is broken, and a current path between the lower vent member 23 and the upper vent member 25 is cut off. When the internal pressure further increases, the upper vent member 25 breaks, and gas is discharged from an opening of the cap 26.

In the non-aqueous electrolyte secondary battery 10 shown in FIG. 1, a positive electrode lead 19 attached to the positive electrode 11 extends to the sealing assembly 17 side through a through hole of the insulating plate 18a, and is connected to a lower surface of the filter 22 that is a bottom plate of the sealing assembly 17 by welding or the like. As a result, the cap 26 which is a top plate of the sealing assembly 17 electrically connected to the filter 22 serves as a positive electrode terminal. A negative electrode lead 20a connected to the negative electrode 12 on the winding start side of the electrode assembly 14 and a negative electrode lead 20b connected to the negative electrode 12 on the winding end side of the electrode assembly 14 extend to the bottom portion side of the case body 16 through the insulating plate 18b, and are connected to a bottom inner surface of the case body 16 by welding or the like. Accordingly, the case body 16 serves as a negative electrode terminal.

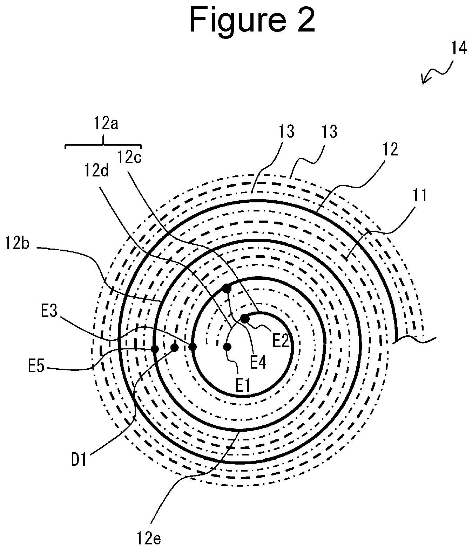

FIG. 2 is a diagram schematically showing a portion on an inner end side of the electrode assembly in the winding direction of the electrode assembly in an A-A cross section in FIG. 1. In FIG. 2, in order to make an arrangement relationship easy to understand, the negative electrode 12 is indicated by a solid line, the positive electrode 11 is indicated by a broken line, and the separator 13 is indicated by a one-dot chain line. Furthermore, in FIG. 2, gaps between the positive electrode 11, the negative electrode 12, and the separator 13 are exaggerated. The electrode assembly 14 is formed by winding the positive electrode 11 and the negative electrode 12 with the separator 13 interposed therebetween. Specifically, the belt-shaped positive electrode 11, the belt-shaped negative electrode 12, and a pair of belt-shaped separators 13 are laminated in the order of one separator 13, the positive electrode 11, the other separator 13, and the negative electrode 12, and then this laminate is spirally wound to produce the electrode assembly 14. In the electrode assembly 14, a longitudinal direction of each of the electrodes is a winding direction, and a width direction of each of the electrodes is a winding axis direction.

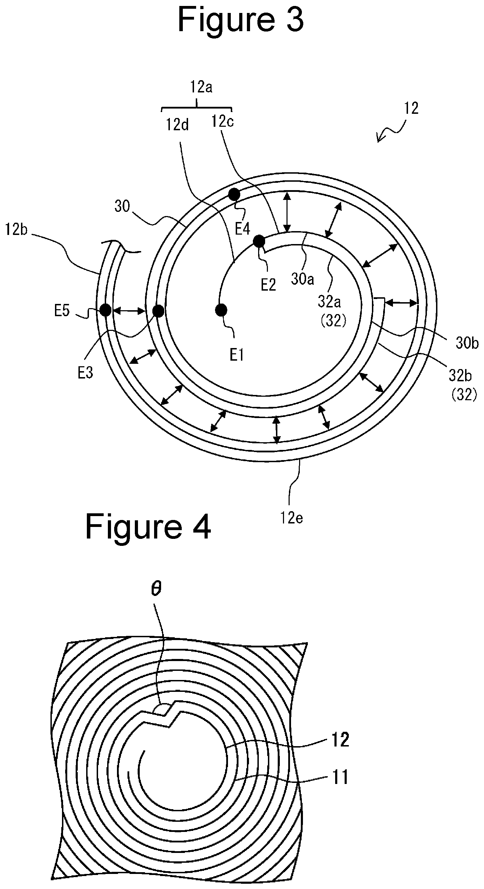

FIG. 3 is a schematic cross-sectional view showing a configuration of the negative electrode on the inner end side in the winding direction of the electrode assembly. In FIG. 3, the positive electrode 11 and the separator 13 are not illustrated. As shown in FIG. 3, the negative electrode 12 has, for example, a negative electrode core 30 and a negative electrode mixture layer 32 formed on the negative electrode core 30. The negative electrode mixture layer 32 shown in FIG. 3 is formed on, for example, both surfaces of the negative electrode core 30, and has a negative electrode mixture layer 32a formed on an inner peripheral surface 30a of the negative electrode core 30 facing radially inward of the electrode assembly 14, and a negative electrode mixture layer 32b formed on an outer peripheral surface 30b of the negative electrode core 30 facing radially outward of the electrode assembly 14, out of both surfaces of the negative electrode core 30. As shown in FIG. 2, the negative electrode 12 has a non-facing portion 12a which does not face the positive electrode 11 with the separator 13 interposed therebetween on the inner end side in the winding direction that is the winding start side of the electrode assembly 14. Furthermore, the negative electrode 12 has a facing portion 12b that is wound following the non-facing portion 12a and faces the positive electrode 11 with the separator 13 interposed therebetween.

The non-facing portion 12a includes a mixture non-facing portion 12c and a core material non-facing portion 12d disposed on the inner side of the mixture non-facing portion 12c in the winding direction. In FIG. 2, a thick solid line indicates the mixture non-facing portion 12c (and the facing portion 12b), and a thin solid line indicates the core material non-facing portion 12d. The mixture non-facing portion 12c is a portion in which the negative electrode mixture layer is formed on at least one surface of the negative electrode core (at least one surface of the inner peripheral surface 30a and the outer peripheral surface 30b of the negative electrode core 30) from an outer end (point E3) of the non-facing portion 12a in the winding direction of the non-facing portion 12a toward the inner side of the non-facing portion 12a in the winding direction, and is a portion from the point E3 to a point E2 along the winding direction in the drawing. The outer end (point E3) of the non-facing portion 12a in the winding direction of the non-facing portion 12a is a facing portion facing a starting end (point D1) inward in the winding direction of the positive electrode 11. The core material non-facing portion 12d is a portion in which the negative electrode mixture layer is not formed on both surfaces of the negative electrode core from an inner end (point E1) of the non-facing portion 12a in the winding direction toward the outer side in the winding direction, and is a portion from the point E1 to a point E2 along the winding direction in the drawing.

In the present embodiment, an average value of a negative electrode surface distance between the mixture non-facing portion 12c and a negative electrode 12e located one turn outward of the mixture non-facing portion 12c is greater than or equal to 90 µm. The negative electrode 12e located one turn outward of the mixture non-facing portion 12c is a portion from a point E4 to a point E5 along the winding direction in the drawing. The point E4 is a point made one turn along the winding direction from the point E2 at the inner end of the mixture non-facing portion 12c in the winding direction, and the point E5 is a point made one turn along the winding direction from the point E3 at the outer end of the mixture non-facing portion 12c in the winding direction. The average value of the negative electrode surface distance is an average value of shortest linear distances from a plurality of points (at least 100 points designated at equal intervals) on an outer peripheral side negative electrode surface in the mixture non-facing portion 12c to an inner peripheral side negative electrode surface in the negative electrode 12e on the outer side of the winding. For example, for the point E2 shown in FIG. 3, a linear distance from the outer peripheral surface 30b of the negative electrode core 30 corresponding to the outer peripheral side negative electrode surface at the point E2 to the surface of the negative electrode mixture layer 32a corresponding to the inner peripheral side negative electrode surface at the point E4 is the shortest linear distance. Furthermore, for example, for the point E3 shown in FIG. 3, a linear distance from the surface of the negative electrode mixture layer 32b corresponding to the outer peripheral side negative electrode surface at the point E3 to the surface of the negative electrode mixture layer 32a corresponding to the inner peripheral side negative electrode surface at the point E5 is the shortest linear distance. The negative electrode surface distance can be calculated by a method in which the distance between portions of the negative electrode core is measured by observing the cross section of the electrode assembly using an X-ray CT apparatus (SMX-225CT FPD HR, manufactured by Shimadzu Corporation), the battery is disassembled after the measurement, the thickness of the electrode is actually measured, and the thickness of the negative electrode mixture layer is subtracted from the measured distance between the portions of the negative electrode core.

As in the negative electrode 12 of the present embodiment, the negative electrode has the mixture non-facing portion 12c, and the average value of the negative electrode distance between the mixture non-facing portion 12c and the negative electrode 12e located one turn outward of the mixture non-facing portion 12c is greater than or equal to 90 µm, whereby the circularity of a winding core portion located at the center of the electrode assembly 14 can be maintained. When the electrode assembly 14 expands due to a charge-discharge cycle, stress is locally applied to the center side of the electrode assembly 14. However, by setting the average value of the negative electrode surface distance between the mixture non-facing portion 12c and the negative electrode 12e located one turn outward of the mixture non-facing portion 12c to a value greater than or equal to 90 µm, for example, a wide space can be secured between the non-facing portion 12a and the negative electrode 12e. Thus, stress applied to the center side of the electrode assembly 14 is relaxed, or even when stress is applied, friction between the non-facing portion 12a and the negative electrode 12 located on the outer side of the non-facing portion 12a in the winding direction is reduced. Therefore, deformation of an electrode plate at a location where the positive electrode 11 and the negative electrode 12 face each other can be suppressed.

The average value of the negative electrode surface distance between the mixture non-facing portion 12c and the negative electrode 12e located one turn outward of the mixture non-facing portion 12c may be greater than or equal to 90 µm, but is preferably greater than or equal to 110 µm, and more preferably greater than or equal to 130 µm from the viewpoint of maintaining the circularity of the winding core portion and suppressing deformation of the electrode plate at the location where the positive electrode 11 and the negative electrode 12 face each other. An upper limit of the average value of the above negative electrode surface distance is not particularly limited, but may be less than or equal to 300 µm from the viewpoint of designing the electrode assembly 14. The negative electrode surface distance can be controlled, for example, by adjusting a winding speed, acceleration, and the like in the formation of the electrode assembly 14.

The mixture non-facing portion 12c is preferably wound in a range of greater than or equal to 0.4 turns and less than or equal to 0.8 turns from the outer end of the non-facing portion 12a in the winding direction toward the inner side of the non-facing portion 12a in the winding direction, for example, from the viewpoint of suppressing deformation of the electrode plate at the location where the positive electrode 11 and the negative electrode 12 face each other while maintaining the circularity of the winding core portion of the electrode assembly 14. When the number of turns of the mixture non-facing portion 12c is less than 0.4 turns, the circularity of the winding core portion may be lowered as compared with a case where the number of turns of the mixture non-facing portion 12c is greater than or equal to 0.4 turns, and when the number of turns of the mixture non-facing portion 12c is greater than 0.8 turns, the effect of suppressing deformation of the electrode plate at the location where the positive electrode 11 and the negative electrode 12 face each other may be lowered as compared with a case where the number of turns of the mixture non-facing portion 12c is less than or equal to 0.8 turns.

In the mixture non-facing portion 12c, the length (A) in the winding direction of the negative electrode mixture layer 32a formed on the inner peripheral surface 30a of the negative electrode core 30 facing radially inward of the electrode assembly 14 is preferably greater than or equal to 0.3 turns along the winding direction of the mixture non-facing portion 12c, and the length (B) in the winding direction of the negative electrode mixture layer 32b formed on the outer peripheral surface 30b of the negative electrode core 30 facing radially outward of the electrode assembly 14 is preferably less than or equal to 2/3 of the length (A) in the winding direction of the negative electrode mixture layer 32a formed on the inner peripheral surface 30a of the negative electrode core 30. When the length (A) of the negative electrode mixture layer 32a in the winding direction and the length (B) of the negative electrode mixture layer 32b in the winding direction satisfy the above ranges, for example, the circularity of the winding core portion located at the center of the electrode assembly 14 may be further maintained as compared with a case where the above ranges are not satisfied. In addition, for example, even when stress is applied to the center side of the electrode assembly 14 when the electrode assembly 14 expands due to a charge-discharge cycle, friction between the non-facing portion 12a and the negative electrode 12e located on the outer side of the non-facing portion 12a in the winding direction is reduced, and deformation of the electrode plate at the location where the positive electrode 11 and the negative electrode 12 face each other may be further suppressed. Although illustration is omitted, in the mixture non-facing portion 12c, the negative electrode mixture layer 32 may be formed only on the inner peripheral surface 30a of the negative electrode core 30 facing radially inward of the electrode assembly 14, and may not be formed on the outer peripheral surface 30b of the negative electrode core 30 facing radially outward of the electrode assembly 14. Even with such a configuration, the circularity of the winding core portion may be maintained, and deformation of the electrode plate at the location where the positive electrode 11 and the negative electrode 12 face each other may be further suppressed. The negative electrode mixture layer 32 is not limited to be formed on both surfaces of the negative electrode core 30 in the non-facing portion 12a and the facing portion 12b, and may be formed only on one surface of the negative electrode core 30 in the non-facing portion 12a and the facing portion 12b.

In the mixture non-facing portion 12c, the length (A) in the winding direction of the negative electrode mixture layer 32a formed on the inner peripheral surface 30a of the negative electrode core 30 is more preferably greater than or equal to 0.7 turns and less than or equal to 1.0 turns along the winding direction of the mixture non-facing portion 12c. In the mixture non-facing portion 12c, the length (B) in the winding direction of the negative electrode mixture layer 32b formed on the outer peripheral surface 30b of the negative electrode core 30 is more preferably greater than or equal to 0.3 turns and less than or equal to 0.6 turns along the winding direction of the mixture non-facing portion 12c. When the above length (A) of the negative electrode mixture layer 32a in the winding direction and the above length (B) of the negative electrode mixture layer 32b in the winding direction satisfy the above ranges, deformation of the electrode plate at the location where the positive electrode 11 and the negative electrode 12 face each other may be further suppressed as compared with a case where the above ranges are not satisfied.

As in the present embodiment, the non-facing portion 12a preferably has the core material non-facing portion 12d. The core material non-facing portion 12d is preferably wound, for example, 0.5 turns or more from the inner end (point E2) of the mixture non-facing portion 12c in the winding direction toward the inner side of the mixture non-facing portion 12c in the winding direction from the viewpoint of securing an installation space of the negative electrode lead. The negative electrode lead 20a shown in FIG. 1 is preferably connected to the negative electrode core 30 of the core material non-facing portion 12d provided in the non-facing portion 12a by welding or the like. That is, the negative electrode lead 20a is preferably connected to the negative electrode core 30 on the inner end side in the winding direction of the electrode assembly 14. For example, the negative electrode lead 20b provided on the outer end side in the winding direction of the electrode assembly 14 and the negative electrode lead 20a provided on the inner end side in the winding direction collect current at two locations, so that the resistance component of the battery can be reduced. The negative electrode core 30 on the outer end side in the winding direction of the electrode assembly 14 may be brought into contact with the case body 16. This makes it possible to further reduce the resistance component of the battery.

As the negative electrode core 30 constituting the negative electrode 12, a foil of a metal that is stable in a potential range of the negative electrode, such as copper or a copper alloy, a film in which the metal is disposed on a surface layer, or the like can be used. The thickness of the negative electrode core 30 is, for example, in a range of 10 µm to 50 µm.

The negative electrode mixture layer 32 constituting the negative electrode 12 contains, for example, a negative electrode active material, a binder, and the like. The thickness of the negative electrode mixture layer 32 is, for example, in a range of 10 µm to 100 µm. The negative electrode 12 can be produced, for example, by applying a negative electrode mixture slurry containing the negative electrode active material, the binder, and the like onto the negative electrode core, drying a coating film, and then rolling the coating film to form the negative electrode mixture layer 32 on the negative electrode core 30.

The negative electrode active material contained in the negative electrode mixture layer 32 is not particularly limited, for example, as long as it can reversibly store and release lithium ions, and examples thereof include a carbon material and a Si-based material. The negative electrode active material preferably contains a Si-based material from the viewpoint of increasing the capacity of the battery.

The carbon material may be, for example, a conventionally known carbon material used as the negative electrode active material, and examples thereof include natural graphite such as flake graphite, massive graphite, and earthy graphite, and artificial graphite such as massive artificial graphite (MAG) and graphitized mesophase carbon microbeads (MCMB).

The Si-based material includes, for example, a lithium ion conducting phase and Si particles dispersed in the lithium ion conducting phase. The lithium ion conducting phase includes, for example, at least one of a silicon oxide phase, a silicate phase, and a carbon phase.

The silicate phase preferably contains, for example, at least one element of alkali metal elements of lithium, sodium, potassium, rubidium, cesium, and francium, and Group 2 elements of the periodic table to which beryllium, magnesium, calcium, strontium, barium, and radium belong from the viewpoint of high lithium ion conductivity and the like. Among them, the silicate phase is preferably a silicate phase containing lithium (hereinafter, may be referred to as a lithium silicate phase) from the viewpoint of high lithium ion conductivity and the like.

The lithium silicate phase is represented by, for example, a formula: Li_{2z}SiO_{2+z} (0 < z < 2). From the viewpoints of stability, ease of production, lithium ion conductivity, and the like, z preferably satisfies the relation of 0 < z < 1, and more preferably z = 1/2.

The Si-based material in which the Si particles are dispersed in the silicon oxide phase is represented by, for example, a general formula SiOₓ (a range of 0 < x < 2 is preferable, and a range of 0.5 ≤ x ≤ 1.6 is more preferable). The Si-based material in which the Si particles are dispersed in the carbon phase is represented by, for example, a general formula SiₓC_{y} (ranges of 0 < x ≤ 1 and 0 < y ≤ 1 are preferable).

A conductive layer coated with conductive carbon may be formed on the surface of the Si-based material. The conductive layer can be formed with, for example, a CVD method in which acetylene, methane, or the like is used, a method in which coal pitch, petroleum pitch, a phenol resin, or the like is mixed with a silicon-based active material and the mixture is heat-treated, or the like. As a heat treatment apparatus that performs the heat treatment, for example, a hot air furnace, a hot press, a lamp, a sheath heater, a ceramic heater, a rotary kiln, or the like can be used. In addition, the conductive layer may be formed by fixing a conductive filler such as carbon black to the particle surface of the Si-based material using a binding material.

The content of the Si-based material is, for example, preferably greater than or equal to 5 mass% with respect to the total mass of the negative electrode mixture layer 32 from the viewpoint of, for example, increasing the capacity of the battery.

In addition to the carbon material and the Si-based material, examples of the negative electrode active material that can reversibly store and release lithium ions include Sn, an alloy containing Sn, a Sn-based material such as tin oxide, and a Ti-based material such as lithium titanate.

Examples of the binder include fluorine-based resins such as polytetrafluoroethylene (PTFE) and polyvinylidene fluoride (PVDF), polyacrylonitrile (PAN), polyimide-based resins, acrylic resins, polyolefin-based resins, styrene-butadiene rubber (SBR), carboxymethyl cellulose (CMC) or a salt thereof, polyacrylic acid (PAA) or a salt thereof, polyvinyl alcohol (PVA), and polyethylene oxide (PEO).

The positive electrode 11 includes a positive electrode core and a positive electrode mixture layer formed on a surface of the positive electrode core. The positive electrode mixture layer is preferably formed on both surfaces of the positive electrode core. As the positive electrode core, a foil of a metal that is stable in a potential range of the positive electrode 11, such as aluminum, a film in which the metal is disposed on a surface layer, or the like can be used. The positive electrode mixture layer contains, for example, a positive electrode active material, a binder, a conductive agent, and the like. The positive electrode 11 can be produced, for example, by applying a positive electrode mixture slurry containing the positive electrode active material, the binder, the conductive agent, and the like onto the positive electrode core, drying a coating film, and then rolling the coating film to form the positive electrode mixture layer on both surfaces of the positive electrode core.

Examples of the positive electrode active material contained in the positive electrode mixture layer include lithium transition metal oxides containing transition metal elements such as Co, Mn, and Ni. Examples of the lithium transition metal oxides include LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, and Li₂MPO₄F (M is at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3). One kind of them may be used alone, or a plurality of kinds of them may be used in combination. From the viewpoint of achieving the high capacity of the non-aqueous electrolyte secondary battery, the positive electrode active material preferably contains a lithium nickel composite oxide such as LiₓNiO₂, LiₓCo_{y}Ni_{1-y}O₂, or LiₓNi_{1-y}M_{y}O_{z} (M is at least one of Na, Mg, Sc, Y, Mn, Fe, Co, Ni, Cu, Zn, Al, Cr, Pb, Sb, and B, 0 <x ≤ 1.2, 0 < y ≤ 0.9, and 2.0 ≤ z ≤ 2.3). Inorganic particles such as tungsten oxide, aluminum oxide, or a lanthanoid-containing compound may be fixed to the particle surface of the lithium transition metal oxide.

Examples of the conductive agent contained in the positive electrode mixture layer include carbon materials such as carbon black (CB), acetylene black (AB), Ketjenblack, carbon nanotube (CNT), graphene, and graphite. Examples of the binder contained in the positive electrode mixture layer may be the same as the examples of the binder in the negative electrode 12.

As the separator 13, for example, a porous sheet having an ion permeation property and an insulation property is used. Specific examples of the porous sheet include a microporous thin film, a woven fabric, and a nonwoven fabric. As a material of the separator, an olefin-based resin such as polyethylene or polypropylene, cellulose, or the like is suitable. The separator 13 may be a laminate including a cellulose fiber layer and a thermoplastic resin fiber layer formed of an olefin-based resin or the like. Further, the separator 13 may be a multi-layer separator including a polyethylene layer and a polypropylene layer, and a separator obtained by applying a material such as an aramid-based resin or ceramic to the surface of the separator 13 may be used.

### EXAMPLES

Hereinafter, the present disclosure will be further described with reference to Examples. However, the present disclosure is not limited to these Examples.

### <Example 1>

### [Production of Positive Electrode]

A positive electrode mixture slurry was prepared by mixing 100 parts by mass of LiNi_{0.88}Co_{0.09}Al_{0.03}O₂, 1 part by mass of acetylene black (AB), and 0.9 parts by mass of polyvinylidene fluoride (PVDF) and adding an appropriate amount of N-methyl-2-pyrrolidone (NMP) thereto. Next, the positive electrode mixture slurry was applied to both surfaces of an aluminum foil having a thickness of 15 µm, and a coating film was dried. Then, the coating film was rolled using a roller and then cut into a predetermined electrode size to produce a positive electrode having a positive electrode mixture layer formed on both surfaces of a positive electrode core. An exposed portion where the positive electrode mixture layer was not formed and the positive electrode core was exposed was provided at a central portion of the positive electrode in the longitudinal direction, and an aluminum positive electrode lead was welded to the exposed portion.

### [Production of Negative Electrode]

A negative electrode mixture slurry was prepared by mixing 92 parts by mass of graphite powder, 6 parts by mass of a Si-based material, 1 part by mass of sodium carboxymethylcellulose (CMC-Na), and 1 part by mass of a dispersion of styrene-butadiene rubber (SBR), and adding an appropriate amount of water thereto. Next, the negative electrode mixture slurry was applied to both surfaces of a copper foil having a thickness of 8 µm, and a coating film was dried. Then, the coating film was rolled using a roller and then cut into a predetermined electrode size to produce a negative electrode having a negative electrode mixture layer formed on both surfaces of a negative electrode core. An exposed portion where the negative electrode mixture layer was not formed and the negative electrode core was exposed was provided at both end portions of the negative electrode in the longitudinal direction, and a nickel negative electrode lead was welded to each negative electrode core exposed portion.

### [Production of Electrode Assembly]

A winding-type electrode assembly was produced by spirally winding the positive electrode and the negative electrode with the separator interposed therebetween. The number of windings of the electrode assembly was set to 18 based on the positive electrode. The mixture non-facing portion of the negative electrode is wound 1.25 turns from the outer end of the non-facing portion in the winding direction of the non-facing portion toward the inner side of the non-facing portion in the winding direction. An average value of a mixture surface distance between the mixture non-facing portion of the negative electrode and the negative electrode located one turn outward of the mixture non-facing portion was 90 µm. A method for calculating the mixture non-facing portion core distance of the negative electrode is as described above. In addition, in the mixture non-facing portion, the length (A) in the winding direction of the negative electrode mixture layer formed on the inner peripheral surface of the negative electrode core facing radially inward of the electrode assembly was equal to the length (B) in the winding direction of the negative electrode mixture layer formed on the outer peripheral surface of the negative electrode core facing radially outward of the electrode assembly.

### [Preparation of Non-Aqueous Electrolyte]

A non-aqueous electrolyte was prepared by adding 5 parts by mass of vinylene carbonate (VC) to 100 parts by mass of a mixed solvent obtained by mixing ethylene carbonate (EC) and dimethyl carbonate (DMC) at a volume ratio of 3:7, and dissolving lithium hexafluorophosphate (LiPF₆) therein at a concentration of 1.5 mol/liter.

### [Production of Non-Aqueous Electrolyte Secondary Battery]

Insulating plates were disposed on the upper and lower sides of the above electrode assembly, respectively, and the electrode assembly was housed in a case body. The negative electrode lead was welded to a bottom portion of the case body, and the positive electrode lead was welded to a sealing assembly. After the non-aqueous electrolyte was injected into the case body, the opening of the case body was sealed with the sealing assembly via a gasket, and then the case body was allowed to stand in a thermostatic chamber at 60°C for 15 hours to produce a non-aqueous electrolyte secondary battery.

### <Example 2>

A non-aqueous electrolyte secondary battery was produced in the same manner as in Example 1 except that the average value of the mixture surface distance between the mixture non-facing portion of the negative electrode and the negative electrode located one turn outward of the mixture non-facing portion was 110 µm.

### <Example 3>

A non-aqueous electrolyte secondary battery was produced in the same manner as in Example 1 except that the average value of the mixture surface distance between the mixture non-facing portion of the negative electrode and the negative electrode located one turn outward of the mixture non-facing portion was 130 µm.

### <Example 4>

A non-aqueous electrolyte secondary battery was produced in the same manner as in Example 1 except that the mixture non-facing portion of the negative electrode was wound 0.75 turns from the outer end of the non-facing portion in the winding direction of the non-facing portion toward the inner side of the non-facing portion in the winding direction.

### <Example 5>

A non-aqueous electrolyte secondary battery was produced in the same manner as in Example 1 except that the average value of the mixture surface distance between the mixture non-facing portion of the negative electrode and the negative electrode located one turn outward of the mixture non-facing portion was 110 µm, and the mixture non-facing portion of the negative electrode was wound 0.75 turns from the outer end of the non-facing portion in the winding direction of the non-facing portion toward the inner side of the non-facing portion in the winding direction.

### <Example 6>

A non-aqueous electrolyte secondary battery was produced in the same manner as in Example 1 except that the average value of the mixture surface distance between the mixture non-facing portion of the negative electrode and the negative electrode located one turn outward of the mixture non-facing portion was 110 µm, and the mixture non-facing portion of the negative electrode was wound 0.40 turns from the outer end of the non-facing portion in the winding direction of the non-facing portion toward the inner side of the non-facing portion in the winding direction.

### <Example 7>

A non-aqueous electrolyte secondary battery was produced in the same manner as in Example 1 except that the average value of the mixture surface distance between the mixture non-facing portion of the negative electrode and the negative electrode located one turn outward of the mixture non-facing portion was 110 µm, and the mixture non-facing portion of the negative electrode was wound 0.30 turns from the outer end of the non-facing portion in the winding direction of the non-facing portion toward the inner side of the non-facing portion in the winding direction.

### <Example 8>

A non-aqueous electrolyte secondary battery was produced in the same manner as in Example 1 except that in the mixture non-facing portion, the ratio (B/A) of the length (B) in the winding direction of the negative electrode mixture layer formed on the outer peripheral surface of the negative electrode core facing radially outward of the electrode assembly to the length (A) in the winding direction of the negative electrode mixture layer formed on the inner peripheral surface of the negative electrode core facing radially inward of the electrode assembly was 0.67.

### <Example 9>

A non-aqueous electrolyte secondary battery was produced in the same manner as in Example 1 except that the mixture non-facing portion of the negative electrode was wound 0.75 turns from the outer end of the non-facing portion in the winding direction of the non-facing portion toward the inner side of the non-facing portion in the winding direction, and the ratio (B/A) of the length (B) in the winding direction of the negative electrode mixture layer formed on the outer peripheral surface of the negative electrode core facing radially outward of the electrode assembly to the length (A) in the winding direction of the negative electrode mixture layer formed on the inner peripheral surface of the negative electrode core facing radially inward of the electrode assembly was 0.67.

### <Example 10>

A non-aqueous electrolyte secondary battery was produced in the same manner as in Example 1 except that the average value of the mixture surface distance between the mixture non-facing portion of the negative electrode and the negative electrode located one turn outward of the mixture non-facing portion was 110 µm, the mixture non-facing portion of the negative electrode was wound 0.75 turns from the outer end of the non-facing portion in the winding direction of the non-facing portion toward the inner side of the non-facing portion in the winding direction, and the ratio (B/A) of the length (B) in the winding direction of the negative electrode mixture layer formed on the outer peripheral surface of the negative electrode core facing radially outward of the electrode assembly to the length (A) in the winding direction of the negative electrode mixture layer formed on the inner peripheral surface of the negative electrode core facing radially inward of the electrode assembly was 0.67.

### <Comparative Example 1>

A non-aqueous electrolyte secondary battery was produced in the same manner as in Example 1 except that the amount of the Si-based material added was changed from 6 parts by mass to 4 parts by mass, and the average value of the mixture surface distance between the mixture non-facing portion of the negative electrode and the negative electrode located one turn outward of the mixture non-opposing portion was 60 µm.

### <Comparative Example 2>

A non-aqueous electrolyte secondary battery was produced in the same manner as in Example 1 except that the average value of the mixture surface distance between the mixture non-facing portion of the negative electrode and the negative electrode located one turn outward of the mixture non-facing portion was 60 µm.

### <Comparative Example 3>

A non-aqueous electrolyte secondary battery was produced in the same manner as in Example 1 except that the average value of the mixture surface distance between the mixture non-facing portion of the negative electrode and the negative electrode located one turn outward of the mixture non-facing portion was 60 µm, and the mixture non-facing portion of the negative electrode was wound 0.75 turns from the outer end of the non-facing portion in the winding direction of the non-facing portion toward the inner side of the non-facing portion in the winding direction.

### <Comparative Example 4>

A non-aqueous electrolyte secondary battery was produced in the same manner as in Example 1 except that the average value of the mixture surface distance between the mixture non-facing portion of the negative electrode and the negative electrode located one turn outward of the mixture non-facing portion was 60 µm, and the mixture non-facing portion of the negative electrode was wound 0.75 turns from the outer end of the non-facing portion in the winding direction of the non-facing portion toward the inner side of the non-facing portion in the winding direction.

### [Circularity of Winding Core Portion of Electrode Assembly]

The non-aqueous electrolyte secondary battery of each of Examples and Comparative Examples was subjected to cross-sectional observation in the vicinity of the winding center of the electrode assembly using an X-ray CT apparatus (SMX-225CT FPD HR, manufactured by Shimadzu Corporation). Then, the length (circumferential length) of one innermost turn of the positive electrode and the area surrounded by the innermost circumference of the positive electrode were measured, and the circularity (4π × the area/(the circumferential length ^2)) of the winding core portion of the electrode assembly was calculated.

### [Evaluation of Deformation of Electrode Plate]

The non-aqueous electrolytic solution secondary battery of each of Examples and Comparative Examples was charged at a constant current of 0.3 It until a battery voltage reached 4.2 V, and then charged at a constant voltage of 4.2 V until a current reached 0.02 It. Thereafter, the non-aqueous electrolyte secondary battery was discharged at a constant current of 1.0 It until the battery voltage reached 2.7 V. This charging and discharging was defined as 1 cycle, and 500 cycles were performed while a pause time of 20 minutes was inserted between every two cycles. After the 500 cycles, the non-aqueous electrolyte secondary battery was charged at a constant current of 0.3 It until the battery voltage reached 4.2 V, and then charged at a constant voltage of 4.2 V until the current reached 0.02 It to enter a charged state. The cross section of the non-aqueous electrolyte secondary battery in this charged state was observed in the vicinity of the center of the winding of the electrode assembly using an X-ray CT apparatus (SMX-225CT FPD HR, manufactured by Shimadzu Corporation). Then, as shown in FIG. 4, when deformation (bending) of the electrode plate (at least one of the positive electrode 11 and the negative electrode 12) having an angle θ less than or equal to 150° at the location where the positive electrode and the negative electrode faced each other was confirmed, it was determined that the electrode plate was deformed, and whether the electrode plate was deformed was evaluated. The number of batteries evaluated was 20.

The evaluation results of the circularity of the winding core portion of the electrode assembly and deformation of the electrode plate in each of Examples and Comparative Examples are summarized in Table 1. Regarding the evaluation results of the circularity of the winding core portion of the electrode assembly, other Examples and Comparative Examples are shown relatively using the circularity of the winding core portion of the electrode assembly of Comparative Example 1 as a reference (100%).

**[Table 1]**

| | Average value of mixture surface distance | Number of turns of mixture non-facing portion | B/A* | Content of Si-based material | Circularity of winding core portion | Rate of occurrence of deformation of electrode plate |
|---|---|---|---|---|---|---|
| Example 1 | 90 µm | 1.25 turns | 1.0 | 6 wt% | 98% | 3/20 |
| Example 2 | 110 µm | 1.25 turns | 1.0 | 6 wt% | 98% | 1/20 |
| Example 3 | 130 µm | 1.25 turns | 1.0 | 6 wt% | 98% | 0/20 |
| Example 4 | 90 µm | 0.75 turns | 1.0 | 6 wt% | 96% | 1/20 |
| Example 5 | 110 µm | 0.75 turns | 1.0 | 6 wt% | 97% | 0/20 |
| Example 6 | 110 µm | 0.40 turns | 1.0 | 6 wt% | 93% | 1/20 |
| Example 7 | 110 µm | 0.30 turns | 1.0 | 6 wt% | 85% | 1/20 |
| Example 8 | 90 µm | 1.25 turns | 0.67 | 6 wt% | 98% | 1/20 |
| Example 9 | 90 µm | 0.75 turns | 0.67 | 6 wt% | 97% | 0/20 |
| Example 10 | 110 µm | 0.75 turns | 0.67 | 6 wt% | 97% | 0/20 |
| Comparative Example 1 | 60 µm | 1.25 turns | 1.0 | 4 wt% | 100% | 8/20 |
| Comparative Example 2 | 60 µm | 1.25 turns | 1.0 | 6 wt% | 99% | 9/20 |
| Comparative Example 3 | 60 µm | 0.75 turns | 1.0 | 6 wt% | 97% | 8/20 |
| Comparative Example 4 | 60 µm | 0.20 turns | 1.0 | 6 wt% | 82% | 1/20 |

| | | | | | | |
|---|---|---|---|---|---|---|
| A: Length in winding direction of negative electrode mixture layer formed on inner peripheral surface of negative electrode core in mixture non-facing portion B: Length in winding direction of negative electrode mixture layer formed on outer peripheral surface of negative electrode core in mixture non-facing portion | | | | | | |

In Comparative Example 1, the winding core portion of the electrode assembly had high circularity, but deformation of the electrode plate was as high as 8/20. On the other hand, in all of Examples 1 to 10, since the circularity of the winding core portion is greater than or equal to 85% based on Comparative Example 1, it can be said that high circularity is maintained. In all of Examples 1 to 10, the deformation of the electrode plate was less than or equal to 3/20, and the occurrence rate was very low. In Comparative Examples 2 and 3, it can be said that high circularity was maintained as in Examples, but the deformation of the electrode plate was greater than or equal to 8/20 at a high occurrence rate. In Comparative Example 4, the circularity of the winding core portion is less than 85% based on Comparative Example 1, and it cannot be said that high circularity is maintained. From these results, the negative electrode has the non-facing portion that does not face the positive electrode with the separator interposed therebetween on the inner end side of the electrode assembly in the winding direction of the electrode assembly, the non-facing portion has the mixture non-facing portion in which the negative electrode mixture layer is formed on at least one surface of the negative electrode core from the outer end of the non-facing portion in the winding direction of the non-facing portion toward the inner side of the non-facing portion in the winding direction, and the average value of the mixture surface distance between the mixture non-facing portion and the negative electrode located one turn outward of the mixture non-facing portion is greater than or equal to 90 µm, so that it is possible to suppress deformation of the electrode plate at the location where the positive electrode and the negative electrode face each other while maintaining the circularity of the winding core portion of the electrode assembly.

### [Supplementary Notes]

(1) A non-aqueous electrolyte secondary battery including:
   an electrode assembly in which a positive electrode and a negative electrode in which a negative electrode mixture layer is formed on a negative electrode core are wound with a separator interposed therebetween; and a non-aqueous electrolyte, in which
   the negative electrode has a non-facing portion that does not face the positive electrode with the separator interposed therebetween on an inner end side of the electrode assembly in a winding direction of the electrode assembly,
   the non-facing portion has a mixture non-facing portion in which the negative electrode mixture layer is formed from an outer end of the non-facing portion in a winding direction of the non-facing portion toward an inner side of the non-facing portion in the winding direction on at least one surface of the negative electrode core, and an average value of a mixture surface distance between the mixture non-facing portion and a negative electrode located one turn outward of the mixture non-facing portion is greater than or equal to 90 µm.
(2) The non-aqueous electrolyte secondary battery according to (1), in which the mixture non-facing portion is wound in a range of greater than or equal to 0.4 turns and less than or equal to 0.8 turns from the outer end of the non-facing portion in the winding direction of the non-facing portion toward the inner side of the non-facing portion in the winding direction.
(3) The non-aqueous electrolyte secondary battery according to (1) or (2), in which in the mixture non-facing portion, a length in a winding direction of a negative electrode mixture layer formed on an inner peripheral surface of the negative electrode core facing radially inward of the electrode assembly is a length greater than or equal to 0.3 turns along the winding direction of the mixture non-facing portion, and
   a length in a winding direction of a negative electrode mixture layer formed on an outer peripheral surface of the negative electrode core facing radially outward of the electrode assembly is less than or equal to 2/3 of the length in the winding direction of the negative electrode mixture layer formed on the inner peripheral surface of the negative electrode core.
(4) The non-aqueous electrolyte secondary battery according to any one of (1) to (3), further including a negative electrode lead connected to the negative electrode core on the inner end side in the winding direction of the electrode assembly.
(5) The non-aqueous electrolyte secondary battery according to any one of (1) to (4), in which
   the negative electrode mixture layer contains a Si-based material, and
   a content of the Si-based material is greater than or equal to 5% by mass with respect to a total mass of the negative electrode mixture layer.

### REFERENCE SIGNS LIST

- 10: Non-aqueous electrolyte secondary battery
- 11: Positive electrode
- 12, 12e: Negative electrode
- 12a: Non-facing portion
- 12b: Facing portion
- 12c: Mixture non-facing portion
- 12d: Core material non-facing portion
- 13: Separator
- 14: Electrode assembly
- 15: Battery case
- 16: Case body
- 17: Sealing assembly
- 18a, 18b: Insulating plate
- 19: Positive electrode lead
- 20a, 20b: Negative electrode lead
- 21: Projecting portion
- 22: Filter
- 23: Lower vent member
- 24: Insulating member
- 25: Upper vent member
- 26: Cap
- 27: Gasket
- 30: Negative electrode core
- 30a: Inner peripheral surface
- 30b: Outer peripheral surface
- 32, 32a, 32b: Negative electrode mixture layer

## Claims

1. A non-aqueous electrolyte secondary battery comprising:
an electrode assembly in which a positive electrode and a negative electrode in which a negative electrode mixture layer is formed on a negative electrode core are wound with a separator interposed therebetween; and a non-aqueous electrolyte, wherein
the negative electrode has a non-facing portion that does not face the positive electrode with the separator interposed therebetween on an inner end side of the electrode assembly in a winding direction of the electrode assembly,
the non-facing portion has a mixture non-facing portion in which the negative electrode mixture layer is formed from an outer end of the non-facing portion in a winding direction of the non-facing portion toward an inner side of the non-facing portion in the winding direction on at least one surface of the negative electrode core, and an average value of a mixture surface distance between the mixture non-facing portion and a negative electrode located one turn outward of the mixture non-facing portion is greater than or equal to 90 µm.

2. The non-aqueous electrolyte secondary battery according to claim 1, wherein the mixture non-facing portion is wound in a range of greater than or equal to 0.4 turns and less than or equal to 0.8 turns from the outer end of the non-facing portion in the winding direction of the non-facing portion toward the inner side of the non-facing portion in the winding direction.

3. The non-aqueous electrolyte secondary battery according to claim 1 or 2, wherein
in the mixture non-facing portion, a length in a winding direction of a negative electrode mixture layer formed on an inner peripheral surface of the negative electrode core facing radially inward of the electrode assembly is a length greater than or equal to 0.3 turns along the winding direction of the mixture non-facing portion, and
a length in a winding direction of a negative electrode mixture layer formed on an outer peripheral surface of the negative electrode core facing radially outward of the electrode assembly is less than or equal to 2/3 of the length in the winding direction of the negative electrode mixture layer formed on the inner peripheral surface of the negative electrode core.

4. The non-aqueous electrolyte secondary battery according to claim 1 or 2, further comprising a negative electrode lead connected to the negative electrode core on the inner end side in the winding direction of the electrode assembly.

5. The non-aqueous electrolyte secondary battery according to claim 1 or 2, wherein
the negative electrode mixture layer contains a Si-based material, and
a content of the Si-based material is greater than or equal to 5% by mass with respect to a total mass of the negative electrode mixture layer.
